(19) Europäisches Patentamt
European Patent Office
Office européen des brevets

(11) Publication number : 0 508 579 A1

# (12) EUROPEAN PATENT APPLICATION

(21) Application number : 92301670.3

(22) Date of filing : 27.02.92

(51) Int. Cl.[5] : C08L 79/08, C08L 63/00, // (C08L79/08, 63:00), (C08L63/00, 79:08)

(30) Priority : 28.02.91 JP 58065/91

(43) Date of publication of application : 14.10.92 Bulletin 92/42

(84) Designated Contracting States : DE FR GB IT

(71) Applicant : SOMAR CORPORATION
11-2, Ginza 4-chome Chuo-ku
Tokyo 104 (JP)

(72) Inventor : Ono, Kazuya
Katsura Heights 207, 14-4 Kurihara 3-chome
Adachi-ku, Tokyo (JP)
Inventor : Kubo, Masao, 105 Jeunet-Palace
Sengendaidaiichi, 765-7 Oaza Fukuroyama
Koshigaya-shi, Saitama-ken (JP)
Inventor : Matsuzaki, Kunimitsu
1188 Kamiochiai
Yono-shi, Saitama-ken (JP)
Inventor : Kitagawa, Katsuji
1358-4, Ushijima
Kasukabe-shi, Saitama-ken (JP)

(74) Representative : Allam, Peter Clerk et al
LLOYD WISE, TREGEAR & CO. Norman House
105-109 Strand
London WC2R 0AE (GB)

## (54) Thermosetting powder composition.

(57) A thermosetting powder composition is disclosed which includes (a) a mixture consisting of a bismaleimide compound and a polymaleimide compound having at least three maleimide groups, (b) an epoxy resin, (c) a curing agent for the epoxy resin, and (d) a curing accelerator. The weight ratio of the bismaleimide compound to the polymaleimide compound is in the range of 1 :9 to 9 :1. The maleimide mixture (a) is present in an amount of 20-80 % based on the total weight of the mixture (a) and the epoxy resin (b). The powder composition exhibits satisfactory fluidity when melted and is useful for slot insulation purposes.

EP 0 508 579 A1

This invention relates to a thermosetting powder composition.

Japanese Published Unexamined Patent Application (Tokkyo Kokai) No. 63-8414 discloses a thermosetting powder composition useful as raw materials for molded products, powder coating materials, binders, etc. This composition includes an epoxy resin, a maleimide compound or a prepolymer thereof, and a specific curing agent for the epoxy resin which is selected from mixtures of dicyandiamide with an imidazole, mixtures of dicyandiamide with an organic peroxide, mixtures of an acid hydrazide with an imidazole, mixtures of an acid hydrazide with an organic peroxide, mixtures of an aromatic diamine with an imidazole and mixtures of an aromatic diamine with a Lewis acid.

While the above known powder composition can afford a cured body which is excellent in heat resistance, the following problems have been found to exist. Firstly, the mechanical properties of the cured body are not satisfactory. Secondly, the known composition requires a high curing temperature and a long curing time. Thirdly, it is difficult to control the fluidity of the composition melted at the time of curing.

The present invention has been made to overcome the above problems. In accordance with the present invention, there is provided a thermosetting powder composition comprising:

(a) a mixture consisting of a bismaleimide compound and a polymaleimide compound, the weight ratio of said bismaleimide compound to said polymaleimide compound being in the range of 1:9 to 9:1, said bismaleimide compound having the following general formula:

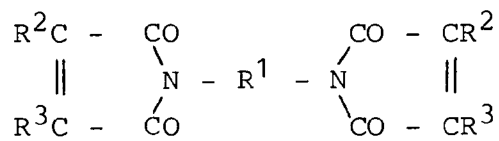

wherein $R^1$ stands for an organic group having no maleimide group and $R^2$ and $R^3$ stand, independently from each other, for a hydrogen atom, a halogen atom, an alkyl group or an aryl group, and said polymaleimide compound having the following general formula:

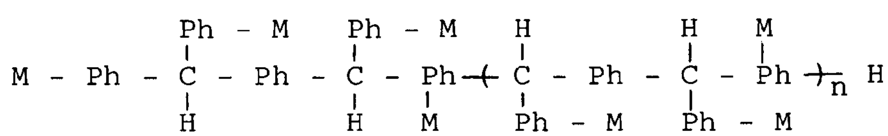

wherein M stands for a substituted or unsubstituted maleimide group, Ph stands for a substituted or unsubstituted phenylene group and n is an integer of 0 or more,

(b) an epoxy resin,

(c) a curing agent for said epoxy resin, and

(d) a curing accelerator, said mixture being present in an amount of 20-80 % based on the total weight of said mixture and said epoxy resin.

The present invention will now be described in detail below.

The thermosetting powder composition according to the present invention uses a combination of a bismaleimide (BMI) having two maleimide groups with a polymaleimide (PMI) having at least three maleimide groups. The bismaleimide is a compound having the following general formula (I):

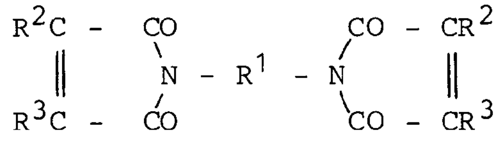

(I)

wherein $R^1$ stands for an organic group having no maleimide group and $R^2$ and $R^3$ stand, independently from each other, for a hydrogen atom, a halogen atom, an alkyl group or an aryl group. The polymaleimide is a compound having the following general formula (II):

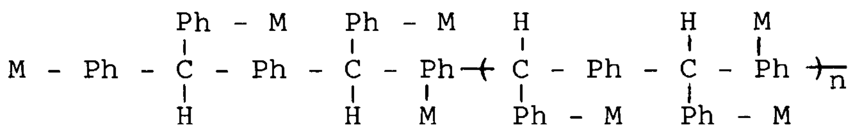 (II)

wherein M stands for a substituted or unsubstituted maleimide group, Ph stands for a substituted or unsubstituted phenylene group and n is an integer of 0 or more, preferably 0-2. The maleimide group M is preferably located at the para position of the phenylene group Ph and the substituent thereof, if any, is preferably located at the meta position of the phenylene group Ph. Preferably, the symbol -Ph-M in the above general formula represents a group of the following general formula (III):

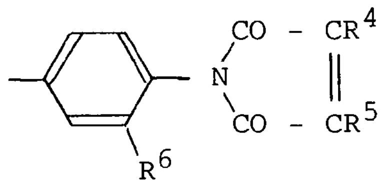 (III)

wherein $R^4$ and $R^5$ stand, independently from each other, for a hydrogen atom, a halogen atom, an alkyl group or an aryl group and $R^6$ stands for hydrogen or a lower alkyl group. As the polymaleimide, there may be used a mixture of the compounds of the above general formula (II) in which the substituents and/or n are different from each other.

The weight ratio BMI/PMI of the bismaleimide compound (BMI) to the polymaleimide compound (PMI) is in the range of 1:9 to 9:1, preferably 2:8 to 8:2. When the ratio BMI/PMI is below 1:9, the viscosity of the powder composition in the melted state is so high that the penetrability becomes poor and, further, it is difficult to obtain a cured product having a smooth surface. Too high a BMI/PMI weight ratio in excess of 9:1, on the other hand, causes reduction of the heat resistance of the cured body obtained from the powder composition.

The mixed maleimide is used in an amount of 20-80 %, preferably 20-60 %, based on the total weight of the mixed maleimide and the epoxy resin. Too large an amount of the mixed maleimide in excess of 80 % by weight will cause reduction in the adhesive strength of the powder composition, while an amount of the mixed maleimide below 20 % by weight will result in reduction in heat resistance of the cured body.

As the epoxy resin to be used in the present invention, there may be mentioned a diglycidyl ether of bisphenol A, a diglycidyl ester of bisphenol F, a cresol novolak epoxy resin, a phenol novolak epoxy resin, an alkylphenol novolak epoxy resin, an alicyclic epoxy resin, a hydrogenated diglycidyl ether of bisphenol A, a hydrogenated diglycidyl ether of bisphenol AD, a diglycidyl ether of a polyol such as propylene glycol or pentaerythrytol, an epoxy resin obtained by reaction of an aliphatic or aromatic carboxylic acid with epichlorohydrin, an epoxy resin obtained by reaction of an aliphatic or aromatic amine with epichlorohydrin, a heterocyclic epoxy resin, a spiroring containing epoxy resin and a resin modified with an epoxy group. These epoxy resins may be used singly or as a mixture of two or more thereof.

It is preferable to use a mixture of 95-70 % by weight of a diglycidyl ether of bisphenol A and 5-30 % by weight of a novolak type epoxy resin since the resulting powder composition shows a high heat resistance and a high toughness when cured.

The epoxy resin to be used in the present invention is generally a solid at 25 °C. A liquid epoxy resin, however, may be used in combination with a solid epoxy resin as long as the resulting powder composition does not cause blocking.

As the curing agent for the above epoxy resin, there may be mentioned an aromatic diamine, a phenol resin, a mixture of an acid anhydride and a phenol resin or a reaction product of monocyclopentadiene or dicyclopentadien with maleic anhydride.

Examples of the aromatic diamines include 2- or 3-phenylenediamine, 2- or 3-xylylenediamine, diaminodiphenylsulfone, 4,4′-methylenebis-o-toluidiene, 1,3-diaminocyclohexane, hexahydroxylylenediamine, 4,4′-bisaminophenylmethane, bis(4-amino-3-methylphenyl)methane, bis(4-amino-3,5-)methane, 4,4′-bisaminophenyl-cyclohexane, 4,4′-bisaminophenyl ether, 2,2-bis(4-amino-3-methylphenyl)methane and diaminodiphenylmethane. Especially preferred is the use of bis(4-amino-3-methylphenyl)methane, bis(4-amino-3,5-)methane or 4,4′-methylenebis-o-toluidine.

Examples of the acid anhydrides include phthalic anhydride, trimellitic acid anhydride, pyromellitic acid anhydride, 3,3′,4,4′-benzophenonetetracarboxylic anhydride, ethylene glycol bisanhydrotrimellitate, glycerol trisanhydrotrimellitate, 5-(2,5-dioxotetrahydrofuryl)-3-methyl-3-cyclohexene-1,2-dicarboxylic anhydride, tetrahydrophthalic anhydride and 4,4′-oxydiphthalic anhydride.

The phenol resin is a product obtained by reaction of a phenol compound with formaldehyde and containing at least two hydroxyl groups. Illustrative of suitable phenol resins are phenol novolak resins, cresol novolak resins, t-butylphenol novolak resins, octylphenol novolak resins, nonylphenol novolak resins and bisphenol novolak resins. These phenol resins may be used singly or as a mixture of two or more thereof. A phenol resin obtained by reaction of two or more different phenol compounds selected, for example, from bisphenol A, bisphenol F, butylphenol and nonylphenol, with formaldehyde may also be used for the purpose of the present invention.

The amount of the curing agent varies with the kind thereof. Generally, the curing agent is used in an amount of 0.01-20 % based on the total weight of the epoxy resin and the mixed maleimide.

As the curing accelerator to be used in the present invention, there may be mentioned tertiary amines such as triethylamine, N,N-dimethylbenzylamine, 2,4,6-tris(dimethylaminomethyl)phenol and N,N-dimethylaniline; imidzole compounds such as 2-methylimidazole and 2-phenylimidazole; triazine salts, cyanoethyl salts and cyanoethyltrimellitic acid salts of imidazole compounds; metal salts such as zinc acetate and sodium acetate; quarternary ammonium salts such as tetraammonium bromide; amides; peroxides; azo compounds; cyanates; isocyanates; and triphenylphosphine.

The amount of the curing accelerator varies with the kind thereof. Generally, the acceleratior is used in an amount of 0.05-5 parts by weight, preferably 0.1-3 parts by weight per 100 parts by weight of a total of the epoxy resin and the mixed maleimide. Too small an amount of the curing accelerator below 0.05 part is disadvantageous because a high temperature and/or a long period of time are required for curing. When the amount of the accelerator exceeds 5 parts, the resulting powder composition becomes poor in stability during storage.

The thermosetting powder composition of the present invention may optionally contain an inorganic filler such as calcium carbonate, silica, alumina, talc, clay, mica, calcium silicate, wollastonite or an surface treated product of the the above, or an organic filler such as a semi or fully cured phenol resin, polyimide resin, polyphenylenesulfone or polyethersulfone. The filler is used in an amount of 30-250 parts by weight, preferably 50-200 parts by weight per 100 parts by weight of the epoxy resin and the mixed maleimide.

The powder coating composition of the present invention may additionally contain one or more additives. Such additives include, for example, a flame retardant such as hexabromobenzene, antimony trioxide or tetrabromobisphenol A; a pigment such as carbon black, titanium oxide, red iron oxide or chromium oxide; a coupling agent, such as of a zirocoaluminum type, a silane type or a titanium type; a leveling agent such as an acrylic acid ester oligomer; a resin such as a butyral resin or a polyester; and a rubber such as carboxy-terminated butadiene acrylonitrile copolymer rubbers and nitrile-butadiene rubbers.

The powder coating composition may be prepared in any known manner. For example, respective ingredients are mixed with each other and the mixture is fused, commingled and extruded with an extruder. The exrudates are then solidified and pulverized to obtain a powder coating composition.

The following examples will further illustrate the present invention.

Example

Epoxy resin powder compositions having the formulations shown in Table 1 were prepared. Each of the compositions was then tested for evaluating performances thereof in the manner descrived hereinafter. The results are summarized in Table 2. In Table 1, the amounts are part by weight and the trademarks and abbreviations are as follows:

<u>Epoxy resin</u>

EPIKOTE 1002: Diglycidyl ether of bisphenol A; manufactured by Yuka-Shell Epoxy Inc.; epoxy equivalent: 650

EPIKOTE 1004: Diglycidyl ether of bisphenol A; manufactured by Yuka-Shell Epoxy Inc.; epoxy equivalent: 925

E180S75: o-Cresol novolak epoxy resin; manufactured by Yuka-Shell Epoxy Inc.; epoxy equivalent: 220

<u>Mixed maleimide</u>

Bismaleimide: 4,4′-diaminodiphenylmethanebismaleimide (compound of the formula (I) above in which $R^2$ and $R^3$ are each hydrogen atom and $R^1$ is $-PhCH_2Ph-$);MB-3000, manufactured by Mitsubishi Petrochemical Co., Ltd.

Polymaleimide: Mixture of compounds of the formula (I) above in which n is 0, 1 and 2 and -Ph-M is represented by the formula (III) above in which $R^4$ and $R^5$ are each hydrogen and $R^6$ is hydrogen and methyl; MP-2000X, manufactured by Mitsubishi Petrochemical Co., Ltd.; imido equivalent: 210-240;

Curing agent

Acid anhydride: 3,3′,4,4′-benzophenonetetracarboxylic anhydride, equivalent: 161
DCPD/MA: Reaction product of dicyclopentadiene with maleic anhydride, ADOMERB DM-55 (manufactured by Idemitsu Petrochemicals, Inc.), equivalent: 225
Phenol resin: o-cresol novolak resin; OCN-130 (manufactured by Nippon Kayaku K. K.), equivalent: 120
Diamine: 4,4′-methylenebis-o-toluidine, C-100 (manufactured by Nippon Kayaku K. K.)

Curing accelerator

PI: 2-phethylimidazole derivative, 2PZ-CNS (manufactured by Shikoku Kasei Co., Ltd.)

Filler

Silicate: calcium silicate, SW-400 (manufactured by Tatumori Inc.)

Leveling agent

Acrylic polymer: Acrylic ester polymer, YK-21 (manufactured by Nihon Carbide Kogyo K. K.)
The test methods are as follows:

(1) Gel Time:

In accordance with JIS C2104, sample powder composition is placed in a circular depressed portion of a hot metal plate maintained at 150, 170 or 200 °C. The period of time required for the sample to gel is measured.

(2) Fluidity:

Sample powder composition (0.5 g) is placed in a mold and shaped into a disc with a diameter of 13 mm and a thickness of D (mm) under a pressure of 200 kg/cm$^2$. The disc is placed on an iron plate disposed within an oven maintained at 150 °C. The iron plate is slanted at an agle of 45°. The disc is thus heated at 150 °C in the oven for 20 minutes and allowed to melt and flow down on the iron plate. The length (d) through which the melt flows is measured. Fluidity is calculated as follows:

$$\text{Fluidity} = (d - 13)/D$$

(3) Cracks:

Sample powder composition is applied onto an iron plate (20mm x 150mm x 3.2mm) preheated to 180-200 °C and heated at that temperature to obtain a completely cure coating with a thickness of 0.3-0.5 mm. After cooling, the coating is observed to check whether or not cracks are formed.

(4) Adhesion Strength:

Defatted test pieces (soft iron plates of 100mm x 20mm x 3 mm) are bonded to each other with sample powder composition. The bonding is performed at 200 °C for 1 hour (curing condition (a)) or at 220 °C for 0.5 hour (curing condition (b)) under a pressure of 1 kg per 15x10 mm$^2$. The bonded test piece is measured for the tension shear strength with a testing speed of 5 mm/minute.

(5) Heat Deflection Temperature (HDT):

Sample powder composition is press-molded to form a test piece. The test piece is cured at 200 °C for 1 hour (curing condition (a)) or at 220 °C for 0.5 hour (curing condition (b)) to obtain a cured body. The cured body is measured for its heat deflection temperature in accordance with ASTM D648.

(6) Weight Loss upon Heating

Sample powder composition is subjected to differential thermal analysis in the following two manners (a) and (b). Scheme (a): Sample is placed on a thermobalance previously heated to 450 °C. Weight loss is calculated as follows:

$$\text{Weight loss} = (W_1 - W_2)/W_1 \times 100\ (\%)$$

wherein $W_1$ is the weight of the sample after 3 minutes from the placement on the thermobalance and $W_2$ is the weight of the sample after 4 minutes from the placement on the thermobalance. Scheme (b): Sample is heated in an oven at 350 °C for 1 hour and then at 400 °C for 20 minutes. Weight loss is calculated as follows:

$$\text{Weight loss} = (W_1 - W_2)/W_1 \times 100\ (\%)$$

wherein $W_1$ and $W_2$ are the weight of the sample before and after the heating, respectively.

The thermosetting powder composition according to the present invention which has excellent workability and affords cured bodies excellent in mechanical properties are useful as raw materials for molded products, powder coating materials, binders, fixation materials for coil windings, encapsulation materials, etc.

Table 1

| Sample No. | 1 | 2 | 3 | 4 | 5 | 6 | 7 | 8 | 9* | 10* | 11* |
|---|---|---|---|---|---|---|---|---|---|---|---|
| Epoxy resin | | | | | | | | | | | |
| EPIKOTE 1002 | 35 | - | 40 | 40 | 40 | 40 | 35 | 35 | 20 | 60 | 20 |
| E180S75 | 35 | 60 | - | - | - | - | 40 | 40 | - | 40 | - |
| Mixed Maleimide | | | | | | | | | | | |
| Bismaleimide | 20 | 20 | 40 | 40 | 40 | 40 | 20 | 5 | 80 | - | - |
| Polymaleimide | 10 | 20 | 20 | 20 | 20 | 20 | 5 | 20 | - | - | 80 |
| Curing agent | | | | | | | | | | | |
| Anhydride | 29 | - | - | - | - | - | 32 | 32 | - | 18 | - |
| DCPD/MA | - | 25 | 14 | - | 5.5 | - | - | - | - | - | - |
| Phenol resin | - | - | - | - | 4.5 | 7.4 | - | - | - | 20 | - |
| Diamine | - | - | - | 14 | - | - | - | - | 16 | - | 14 |
| Curing accelerator | | | | | | | | | | | |
| PI | 1.0 | 2.5 | 2.0 | 1.5 | 2.0 | 2.0 | 1.0 | 1.0 | 1.5 | 0.3 | 1.0 |
| Filler | | | | | | | | | | | |
| Silicate | 100 | - | - | - | - | - | 100 | - | 200 | 100 | 100 |
| Leveling agent | | | | | | | | | | | |
| Acrylic polymer | 0.5 | 0.5 | 0.5 | 0.5 | 0.5 | 0.5 | 0.5 | 0.5 | 0.5 | 0.5 | 0.5 |

*: Comparative Sample

Table 2

| Sample No. | 1 | 2 | 3 | 4 | 5 | 6 | 7 | 8 | 9* | 10* | 11* |
|---|---|---|---|---|---|---|---|---|---|---|---|
| Gel Time | | | | | | | | | | | |
| 150 °C | 87 | 180 | 150 | - | - | 85 | 90 | 95 | - | 95 | - |
| 170 °C | 45 | 110 | 95 | 376 | - | 40 | 43 | 48 | - | 33 | - |
| 200 °C | 21 | 35 | 28 | 80 | 109 | 15 | 17 | 20 | 127 | 17 | 95 |
| Fluidity | 0.7 | 30 | 15 | 26 | 31 | 6.5 | 3.5 | 6.0 | 3.0 | 7.0 | 0.5 |
| Cracks | none | none | none | none | none | none | none | none | formed | none | formed |
| Adhesion ($kg/cm^2$) | | | | | | | | | | | |
| Condition (a) | 240 | 190 | 205 | 220 | 230 | 220 | 225 | 230 | 145 | 210 | 165 |
| Condition (b) | 235 | 185 | 215 | 230 | 210 | 215 | 230 | 235 | 160 | 220 | 170 |
| HDT (°C) | | | | | | | | | | | |
| Condition (a) | 185 | 200 | 210 | 195 | 180 | 200 | 190 | 220 | 200 | 150 | 220 |
| Condition (b) | 190 | 210 | 215 | 210 | 200 | 210 | 210 | 225 | 230 | 180 | 245 |
| Weight Loss (wt %) | | | | | | | | | | | |
| Heat Scheme (a) | 5.4 | 2.8 | 6.5 | 7.5 | 6.0 | 4.5 | 3.5 | 3.3 | 2.1 | 8.6 | 2.5 |
| Heat Scheme (b) | 7.4 | 15.3 | 13.5 | 8.9 | 7.3 | 8.8 | 7.5 | 8.0 | 6.5 | 18.5 | 8.0 |

*: Comparative Sample

## Claims

**1.** A thermosetting powder composition comprising:

(a) a mixture consisting of a bismaleimide compound and a polymaleimide compound, the weight ratio of said bismaleimide compound to said polymaleimide compound being in the range of 1:9 to 9:1, said bismaleimide compound having the following general formula:

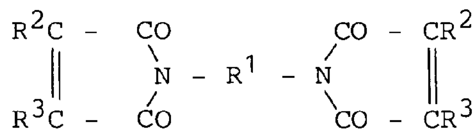

wherein $R^1$ stands for an organic group having no maleimide group and $R^2$ and $R^3$ stand, independently from each other, for a hydrogen atom, a halogen atom, an alkyl group or an aryl group, and said polymaleimide compound having the following general formula:

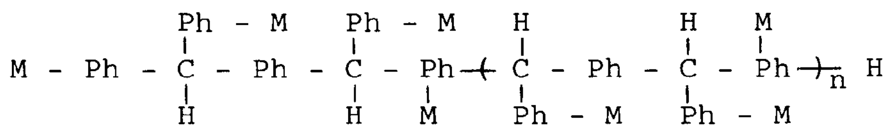

wherein M stands for a substituted or unsubstituted maleimide group, Ph stands for a substituted or unsubstituted phenylene group and n is an integer of 0 or more,

(b) an epoxy resin,

(c) a curing agent for said epoxy resin, and

(d) a curing accelerator, said mixture being present in an amount of 20-80 % based on the total weight of said mixture and said epoxy resin.

**2.** A composition as claimed in claim 1 wherein -Ph-M is a group of the following general formula:

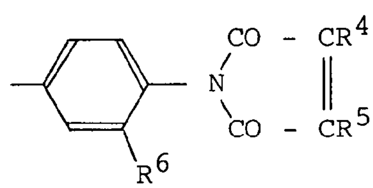

wherein $R^4$ and $R^5$ stand, independently from each other, for a hydrogen atom, a halogen atom, an alkyl group or an aryl group and $R^6$ stands for hydrogen or a lower alkyl group, and n is an integer of 0-2.

European Patent Office

# EUROPEAN SEARCH REPORT

Application Number

EP 92 30 1670

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,D | PATENT ABSTRACTS OF JAPAN vol. 12, no. 209 (C-504)(3056) 15 June 1988 & JP-63 008 414 ( SOMAR CORPORATION ) 14 January 1988 * abstract * --- | 1,2 | C08L79/08 C08L63/00 //(C08L79/08, 63:00) //(C08L63/00, L79:08) |
| A | US-A-4 816 531 (YOUNG) * claims 1-9 * --- | 1,2 | |
| A | EP-A-0 354 033 (MITSUI TOATSU CHEMICALS INC.) * claims 1-3 * ----- | 1,2 | |
| | | | TECHNICAL FIELDS SEARCHED (Int. Cl.5 ) |
| | | | C08L |

The present search report has been drawn up for all claims

| Place of search | Date of completion of the search | Examiner |
|---|---|---|
| THE HAGUE | 27 MAY 1992 | GLANDDIER A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)